# EUROPÄISCHE PATENTSCHRIFT

(11) **EP 3 858 129 B1**
(45) Veröffentlichungstag und Bekanntmachung des Hinweises auf die Patenterteilung: **10.01.2024**
(21) Anmeldenummer: 20205626.3
(22) Anmeldetag: 04.11.2020
(51) Int. Cl.: A01D 41/127, A01D 41/14

(54) **SCHNEIDTISCHLÄNGENADAPTION**
CUTTING TABLE LENGTH ADAPTATION
AJUSTEMENT DE LA LONGUEUR DE TABLE DE COUPE

(30) Priorität: 03.02.2020 DE 102020102596
(43) Veröffentlichungstag der Anmeldung: 04.08.2021
(73) Patentinhaber: CLAAS Selbstfahrende Erntemaschinen GmbH, 33428 Harsewinkel (DE)
(72) Erfinder: Baumgarten, Joachim, 48361 Beelen (DE); Wilken, Andreas, 49143 Bissendorf (DE); Neitemeier, Dennis, 59510 Lippetal (DE); Bormann, Bastian, 33334 Gütersloh (DE); Spiekermann, Sebastian, 48346 Ostbevern (DE); Irmer, Daniel, 33442 Herzebock-Clarholz (DE)
(74) Vertreter: CLAAS Gruppe

(56) Entgegenhaltungen:
- EP-A1- 2 681 984
- EP-A1- 3 132 665
- EP-A1- 3 150 047
- EP-A1- 3 766 329
- DE-A1-102005 050 751

## Beschreibung

Die Erfindung betrifft eine landwirtschaftliche Erntemaschine mit den Merkmalen des Oberbegriffs von Anspruch 1.

Bei der in Rede stehenden landwirtschaftlichen Erntemaschine handelt es sich um jedwede landwirtschaftliche Erntemaschine, die mit einem Erntevorsatz zum Schneiden und Aufnehmen von Erntegut ausgebildet ist und zumindest einen dem Schneidwerk zugeordneten Schneidtisch, welcher in seiner Schneidtischlänge verstellbar ist, eine dem Schneidwerk zugeordnete Haspel, welche in einer Haspelvertikalposition und Haspellängsposition verstellbar ist, einen dem Schneidwerk nachgeordneten und dem Dreschwerk der Erntemaschine vorgeordneten Schrägförderer, ein Fahrerassistenzsystem zur Ansteuerung des Schneidwerks, wobei das Fahrerassistenzsystem einen Speicher zum Hinterlegen von Daten und eine Rechenvorrichtung zur Verarbeitung der in dem Speicher hinterlegten Daten umfasst, wobei die Rechenvorrichtung dazu eingerichtet ist mittels zumindest einer Eingangsgröße mindestens einen Maschinenparameter autonom zu ermitteln und dem Schneidwerk vorzugeben, wobei die Maschinenparameter die Schneidtischlänge und/oder die Haspelvertikalposition und/oder die Haspellängsposition umfassen kann.

Für die Getreide-, Raps oder Sojaernte werden Mähdrescher mit einem Erntevorsatz versehen, der als ein in seiner Länge veränderliches Schneidwerk ausgebildet ist. Entsprechende Schneidwerke, die für die Ernte dieser unterschiedlichen Fruchtarten verwendet werden, weisen zumeist einen mittels entsprechender Stellelemente gegenüber der Schneidwerksmulde verschiebbaren Schneidtisch auf, wobei dieser Schneidtisch mit einem Mähbalken zum Schneiden des Ernteguts versehen ist. Folglich kann durch eine entsprechende Längsverschiebung des Schneidtisches gegenüber der in der Schneidwerksmulde angeordneten Einzugsschnecke die Schneidtischlänge des Schneidwerks im Hinblick auf eine Optimierung der Aufnahme des Erntegutes an unterschiedliche Halmlängen und insbesondere an die Ernte von Raps angepasst werden. Ziel ist es, einen inhomogenen Gutfluss sowie Ernteverluste zu vermeiden, die darin bestehen, dass ein Anteil der Getreideähren sowie Rapsschoten oder Rapskörner nicht in die Schneidwerksmulde und von dort aus über den Schrägförderer in die Dresch- und Trenneinrichtung sondern auf das Feld gelangen, wo sie unter Umständen auswachsen.

Im Falle einer zu kurzen Schneidtischlänge wird das Erntegut mit der Haspel in Richtung der Einzugsschnecke geschoben. Ein Schieben des Ernteguts mit der Haspel nach vorne und ein Anstauen von Weizenhalmen im Bereich zwischen Messer und Einzugsschnecke, weil der Schneidtisch zu kurz eingestellt ist, führt zu einer ungleichmäßigen Erntegutzufuhr am Schrägförderer. Weiterhin entsteht ein ungleichmäßiges Stoppelbild. In der Mitte des Schneidwerks bildet sich ein Stau und die Halme werden vor dem Schnitt durch das Mähmesser nach vorne geschoben.

Bei einer zu langen Schneidtischlänge bleibt das Erntegut hinter dem Messer liegen und wird durch das folgende Erntegut oder durch die Haspel in Richtung der Einzugsschnecke gedrückt, so dass in aller Regel eine zu lange Schneidtischlänge ebenfalls zu einer ungleichmäßigen Erntegutzufuhr führt.

Aus einen am Schneidwerk entstehenden inhomogener Gutfluss resultiert eine inhomogene Beschickung der Arbeitsorgane der Erntemaschine, womit wiederum Leistungseinbußen, Qualitätseinbußen und Kornverlusten einhergehen. Dementsprechend ist eine Steuerung der Schneidtischlänge erstrebenswert, welche einen optimalen Erntegutdurchsatz kombiniert mit einer homogenen Erntegutzufuhr erreicht.

Dem Fahrer gelingt es in aller Regel nur sporadisch die Schneidtischlänge manuell optimal an die vorliegenden und insbesondere an wechselhafte Erntebedingungen anzupassen. Darüber hinaus wird es von dem Fahrer als lästig empfunden vor und während eines Erntevorgangs die Schneidtischlänge manuell zu steuern und an sich ständig ändernde Erntebedingungen anzupassen. Zur Entlastung des Fahrers der Erntemaschine ist es wünschenswert, die Steuerung der Längsverschiebung des Schneidtisches gegenüber der Einzugsschnecke automatisch auszugestalten, sodass diese sich ohne ein Zutun des Fahrers an die vorliegenden Erntebedingungen anpasst.

Aus der EP 3 132 711 A1 ist eine landwirtschaftliche Erntemaschine mit einem Schneidwerkautomaten zum autonomen Ermitteln mindestens eines Schneidwerkparameters bekannt geworden. Hierfür ist vorgesehen, dass der Fahrer eine Ernteprozessstrategie auswählt, anhand dessen die Schneidwerkparameter autonom angepasst werden. Die zu ermittelnden Schneidwerkparameter umfassen unter anderem die Schneidtischlänge. Nachteilig ist, dass die autonome Ermittlung des Schneidwerkparameters "Schneidtischlänge" nicht in Abhängigkeit eines Schwingungskoeffizienten, welcher durch einen inhomogenen Erntegutstrom hervorgerufene Varianzen des Erntegutdurchsatzes beschreibt, erfolgt. Wie bereits oben erläutert, beeinflusst die Schneidtischlänge die Homogenität des Erntegutstroms im besonderen Maße. Am Schneidwerk entstehende Inhomogenitäten des Erntegutstroms führen zu den bereits genannten Nachteilen einer inhomogenen Beschickung der Arbeitsorgane der Erntemaschine und einen damit einhergehenden unruhigen Lauf der Erntemaschine, Leistungseinbußen, Qualitätseinbußen und Kornverlusten.

Aus der EP3 527 059 ist ein Mähdrescher mit einer Sensoreinrichtung zur berührungslosen Erfassung der Schichthöhe und ein Verfahren, welches die Information der Sensoreinrichtung zum Verändern der Betriebsparameter nutzt, bekannt geworden. Nachteilig an der EP3 527 059 ist, dass keine Informationen bzgl. der Schwankungen des Erntegutdurchsatzes ermittelt werden, sowie keine Ansteuerung der Schneidwerksparameter mittels der Informationen erfolgt. Aus der EP 3 766 329 und aus der EP 2 681 984 sind Mähdrescher bekannt geworden, bei denen die Schwankungen des Erntegutdurchsatzes zur Einstellung der Schneidtischlänge und der Haspelposition berücksichtigt werden.

Es ist deshalb die Aufgabe der vorliegenden Erfindung, die Nachteile des Stands der Technik zu beheben und insbesondere ein Fahrerassistenzsystem zur automatischen Steuerung der Schneidtischlänge zu schaffen, mit welcher Durchsatzschwankungen reduziert werden.

Diese Aufgabe wird bei einer landwirtschaftlichen Erntemaschine nach dem Oberbegriff des Anspruchs 1 durch die Merkmale des kennzeichnenden Teils von Anspruch 1 gelöst.

Gemäß dem Anspruch 1 wird eine landwirtschaftliche Erntemaschine, insbesondere Mähdrescher, mit einem als Erntevorsatz ausgebildeten Schneidwerk zum Schneiden und Aufnehmen von Erntegut vorgeschlagen. Die vorschlagsgemäße landwirtschaftliche Erntemaschine umfasst zumindest einen dem Schneidwerk zugeordneten Schneidtisch, welcher in seiner Schneidtischlänge verstellbar ist, eine dem Schneidwerk zugeordnete Haspel, welche in einer Haspelvertikalposition und Haspellängsposition verstellbar ist, einen dem Schneidwerk nachgeordneten und dem Dreschwerk der Erntemaschine vorgeordneten Schrägförderer, ein Fahrerassistenzsystem zur Ansteuerung des Schneidwerks, wobei das Fahrerassistenzsystem einen Speicher zum Hinterlegen von Daten und eine Rechenvorrichtung zur Verarbeitung der in dem Speicher hinterlegten Daten umfasst, wobei die Rechenvorrichtung dazu eingerichtet ist mittels zumindest einer Eingangsgröße mindestens einen Maschinenparameter autonom zu ermitteln und dem Schneidwerk vorzugeben, wobei die Maschinenparameter die Schneidtischlänge und/oder die Haspelvertikalposition und/oder die Haspellängsposition umfassen kann. Erfindungsgemäß sind Mittel vorgesehen, die einen Erntegutdurchsatz und einen die Schwankung des Erntegutdurchsatzes beschreibenden Schwingungskoeffizienten in einem vor dem Dreschwerk liegenden Bereich ermitteln. Weiterhin ist vorgesehen, dass das Fahrerassistenzsystem eingerichtet ist aus dem ermittelten Schwingungskoeffizienten die Schneidtischlänge anzupassen.

Die Erfindung hat viele Vorteile. Zunächst einmal wird durch eine automatische Ermittlung der Schneidtischlänge der Fahrer entlastet, da eine ständige Überwachung der Schneidtischlänge ein hohes Maß an Konzentration und Aufmerksamkeit beansprucht. Wie bereits oben beschrieben, führt eine zu kurze oder zu lange Schneidtischlänge zu einer ungleichmäßigen Erntegutzufuhr am Schrägförderer und einer ungleichmäßigen Beschickung der dem Schrägförderer prozesstechnisch nachgeordneten Arbeitsorgane, wie beispielsweise einem Dreschwerk. Mittels der Anpassung der Schneidtischlänge aus dem ermittelten Schwingungskoeffizienten, lässt sich die Schneidtischlänge derart einstellen, dass eine ungleichmäßige Erntegutzufuhr vermieden wird. Weiterhin ist es hierbei besonders vorteilhaft, wenn die Mittel den Erntegutdurchsatz und den Schwingungskoeffizienten in einem vor dem Dreschwerk liegenden Bereich ermitteln, da so kurzfristig auf sich ändernde Druschbedingungen reagiert werden kann und eine geeignete Schneidtischlänge ermittelbar ist. Die Schneidtischlänge sowie der Erntegutdurchsatz, der die geförderte Menge des Ernteguts beschreibt, sind funktional voneinander Abhängig, sodass sich bei einer suboptimalen auf den Erntegutdurchsatz angepassten Schneidtischlänge ebenfalls ein inhomogener bzw. variierender Erntegutdurchsatz ergibt. Die Erfindung hat erkannt, dass die Inhomogenitäten des Erntegutdurchsatzes dementsprechend ein besonders gutes Gütekriterium für die Ermittlung der Schneidtischlänge bildet. Ein Schwingungskoeffizient als Maß für die Inhomogenitäten ist somit besonders vorteilhaft zur Ermittlung einer für die aktuell vorliegenden Druschbedingungen optimalen Schneidtischlänge.

Bevorzugt kann das Fahrerassistenzsystem dazu eingerichtet sein zur Anpassung der Schneidtischlänge zusätzlich zu dem Schwingungskoeffizienten den ermittelten Erntegutdurchsatz zu verwenden. Durch diese bevorzugte Ausführungsform der Ermittlung der Schneidtischlänge aus dem Schwingungskoeffizienten und dem Erntegutdurchsatz heraus wird erreicht, dass die Ermittlung einer optimal geeigneten Schneidtischlänge verbessert werden kann.

In einer vorteilhaften Weiterbildung können die Mittel eine im Schrägförderer befindliche Durchsatzmesseinrichtung umfassen, wobei die Durchsatzmesseinrichtung derart ausgestaltet ist, dass diese ein durchsatzabhängiges Gutstromsignal ermittelt, welches vorzugsweise von einem Erntegutstrom verursachte Auf- und Abbewegungen eines Förderorgans, insbesondere einer umlaufend antreibbaren Förderkette umfasst. Diese Weiterbildung ist besonders vorteilhaft, da ein Ermitteln der Auf- und Abbewegungen des Förderorgans mittels einer Durchsatzmesseinrichtung eine einfache und kostengünstige Ermittlung eines Gutstromsignals ermöglicht und mittels eines derartigen Gutstromsignals der Erntegutdurchsatz und der Schwingungskoeffizient mit einfachen Maßnahmen ermittelbar sind.

Bevorzugt kann die Durchsatzmesseinrichtung mindestens ein Sensorelement umfassen, vorzugsweise ein induktives Sensorelement, welches die von einem Erntegutstrom verursachte Auf- und Abbewegungen des Förderorgans berührungslos erfasst, um mit einfachen Maßnahmen die Erfassung der Auf- und Abbewegungen des Förderorgans zu erreichen.

In einer bevorzugten Ausgestaltung kann die Durchsatzmesseinrichtung mit einer im Schrägförderer befindlichen Schichthöhenwalze in Wirkverbindung stehen, wobei die Schichthöhenwalze derart angeordnet ist, dass die von dem Erntegutstrom verursachten Auf- und Abbewegungen des Förderorgans auf die Schichthöhenwalze übertragen werden, wobei die Durchsatzmesseinrichtung derart ausgebildet ist, dass diese die Auf- und Abbewegungen der Schichthöhenwalze erfasst, um mit einfachen Maßnahmen die Erfassung der Auf- und Abbewegungen des Förderorgans zu erreichen.

Vorteilhaft ist es, wenn das Fahrerassistenzsystem das durchsatzabhängige Gutstromsignal aufzeichnet und im Speicher hinterlegt, wobei das Gutstromsignal in der Rechenvorrichtung mittels Frequenzanalyse in seine Frequenzanteile zerlegt wird, sodass mit einfachen Maßnahmen eine Analyse des Gutstromsignals durchgeführt werden kann. Dies ist besonders vorteilhaft, da beispielsweise mittels Filterung der Frequenzanteile die zur Ermittlung der Maschinenparameter relevanten Frequenzen besonders leicht ermittelt werden können.

Erfindungsgemäß wird das Fahrerassistenzsystem derart ausgebildet, dass mittels der Rechenvorrichtung die Frequenzanteile in einen Gleichanteil und in einen Schwingungsanteil separiert werden, wobei mittels des Schwingungsanteils der Schwingungskoeffizient bestimmt wird.

Erfindungsgemäß wird mittels des Gleichanteils der Erntegutdurchsatz bestimmt.

Bevorzugt kann der Gleichanteil die Frequenzanteile mit tiefen Frequenzen und der Schwingungsanteil die Frequenzanteile mit höheren Frequenzen umfassen.

Dies hat viele Vorteile. Somit können beispielsweise auf einfache Art und Weise die Frequenzanteile mit hohen Frequenzen den Varianzen des Erntegutdurchsatzes zugeordnet werden und zur Bestimmung des Schwingungskoeffizienten Verwendung finden. Gleichermaßen gestaltet sich eine Zuordnung hoher Frequenzanteile zur Ermittlung des Erntegutdurchsatzes ebenfalls besonders einfach.

Tiefe Frequenzen, insbesondere eine Frequenz mit 0 Herz, ist besonders gut geeignet um den Erntegutdurchsatz zu beschreiben, da diese den Ausschlag des Förderorgans über eine längere zeitliche Periode widerspiegeln. Weiterhin können die höheren Frequenzen, insbesondere Frequenzen die höher als 0 Herz sind, besonders gut für die Beschreibung der Auf- und Abbewegungen des Förderorgans und somit der Varianz des Erntegutdurchsatzes geeignet sein.

Bevorzugt kann eine Summe der Beträge der Amplituden der dem Gleichanteil zugeordneten Frequenzen den Erntegutdurchsatz bilden, so dass mit einfachen Maßnahmen aus den dem Gleichanteil zugeordneten Frequenzen ein Maß, welches den Erntegutdurchsatz beschreibt, Ermittelt werden kann.

Bevorzugt kann eine Summe der Beträge der Amplituden der dem Schwingungsanteil zugeordneten Frequenzen den Schwingungskoeffizienten bilden, so dass mit einfachen Maßnahmen aus den dem Schwingungsanteil zugeordneten Frequenzen der Schwingungskoeffizient gebildet werden kann.

Bevorzugt kann das Fahrerassistenzsystem zum Abbilden der funktionalen Zusammenhänge zwischen dem Schwingungskoeffizienten, dem Erntegutdurchsatz und der Schneidtischlänge in einem Kennfeld ausgebildet sein und mittels des Kennfeldes die Schneidtischlänge ansteuern. Mittels eines Kennfeldes lassen sich die obigen funktionalen Zusammenhänge mit geringem rechnerischen Aufwand abbilden.

Vorteilhafterweise kann innerhalb des Kennfeldes für die skalierten Erntegutdurchsätze eine jeweilige Schneidtischlänge ermittelt werden, bei welcher der Schwingungskoeffizient ein Minimum annimmt. Diese Ermittlung der den skalierten Erntegutdurchsätzen zugeordneten Minima ist besonders vorteilhaft, da diese die optimale Schneidtischlänge zum Ansteuern des Erntevorsatzes innerhalb des Kennfeldes angeben.

Bevorzugt kann das Fahrerassistenzsystem dazu eingerichtet sein, für einen aktuell an der Erntemaschine vorliegenden Erntegutdurchsatz dem Schneidwerk die Schneidtischlänge vorzugeben, bei der der Schwingungskoeffizient das Minimum annimmt. Dies ist besonders vorteilhaft, da somit die Schwankungen des Erntegutdurchsatzes reduziert werden.

Insbesondere kann das Fahrerassistenzsystem derart ausgestaltet sein, dass dieses das Kennfeld zumindest zyklisch an einen während eines Dreschvorgangs vorliegenden Ernteprozesszustand anpasst. Dies ist besonders vorteilhaft, da somit mittels des Kennfelds fortgehend die optimal für den aktuell vorliegenden Prozesszustand geeignete Schneidtischlänge ermittelbar ist.

Vorzugsweise ist mindestens ein Initialkennfeld im Speicher des Fahrerassistenzsystems hinterlegt, wobei bei der ersten Ermittlung der Schneidtischlänge das Fahrerassistenzsystem die Ermittlung basierend auf dem Initialkennfeld vornimmt, weiter vorzugsweise, dass zu Beginn des Dreschvorgangs das Fahrerassistenzsystem die Ermittlung der Schneidtischlänge basierend auf dem Initialkennfeld vornimmt. Hierdurch kann bei einer geeigneten Auswahl des Initialkennfelds das Initialkennfeld in nur wenigen Abgleichzyklen auf eine gute Übereinstimmung mit dem tatsächlichen Ernteprozesszustand gebracht werden.

Eine vorteilhafte Weiterbildung sieht vor, dass das Fahrerassistenzsystem einrichtet ist, die Haspelposition und/oder Haspelvertikalposition an die Schneidtischlänge anzupassen, um eine optimale Zufuhr des Ernteguts zur Förderschnecke zu gewährleisten und Spritzkornverluste zu vermeiden.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine Seitenansicht einer vorschlagsgemäßen Erntemaschine,
- Figur 2: eine schematische Darstellung eines Fahrerassistenzsystems einer vorschlagsgemäßen Erntemaschine,
- Figur 3: einen schematischen Ablaufplan zur Ermittlung der Schneidtischlänge

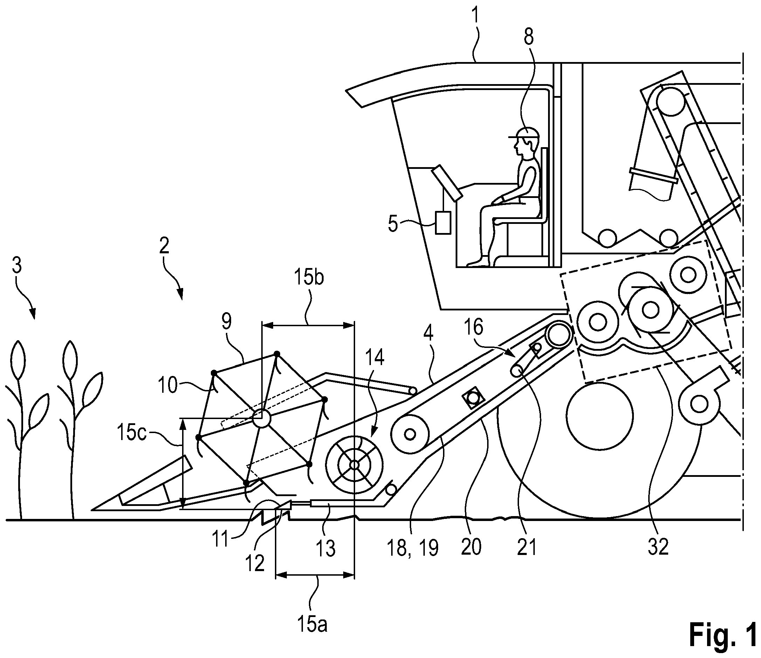

Eine an sich bekannte, als Mähdrescher ausgebildete landwirtschaftliche Erntemaschine 1 weist ein als Erntevorsatz ausgebildetes Schneidwerk 2 zum Schneiden und Aufnehmen von Erntegut auf. Das Schneidwerk 2 ist vorzugsweise austauschbar gegen ein anderes Schneidwerk 2, so dass die Erntemaschine 1 auf das Ernten unterschiedlicher Fruchtarten angepasst werden kann. Unter dem Erntegut ist dabei das gesamte vom Feldbestand 3- über das Schneidwerk 2 aufgenommene Material zu verstehen. Wie in Fig. 1 zu erkennen ist, wird der Feldbestand 3 durch das Schneidwerk 2 gemäht und das somit gewonnene Erntegut einem Schrägförderer 4 zugeführt.

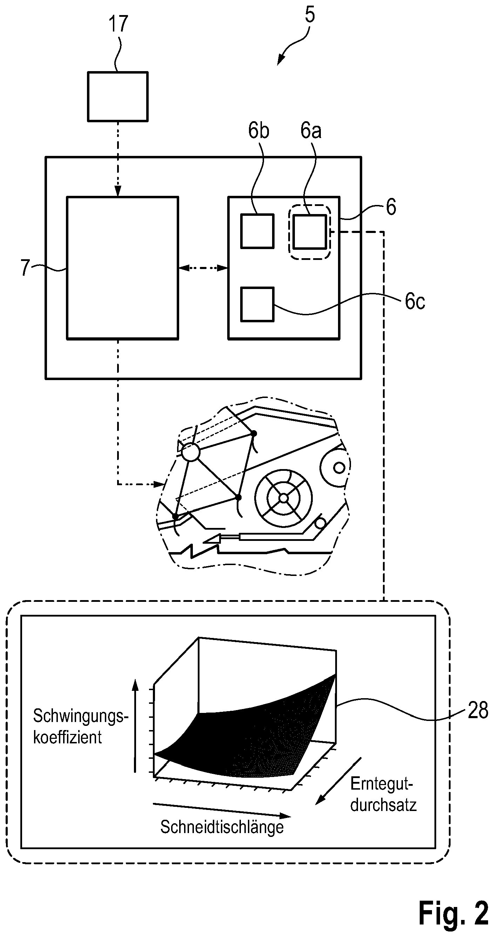

Die vorschlagsgemäße Erntemaschine 1 weist ferner ein Fahrerassistenzsystem 5 zur Ansteuerung des Schneidwerks 2 auf. Dieses Fahrerassistenzsystem 5 umfasst einen Speicher 6 zum Hinterlegen von Daten - also einen Speicher im informationstechnischen Sinne - und eine Rechenvorrichtung 7 zur Verarbeitung der in dem Speicher 6 hinterlegten Daten. Grundsätzlich ist das Fahrerassistenzsystem 5 dazu eingerichtet, einen Fahrer 8 der Erntemaschine 1 bei der Bedienung der Erntemaschine 1 zu unterstützen. Das Fahrerassistenzsystem 5 mit dem Speicher 6 und der Rechenvorrichtung 7 ist schematisch in Fig. 2 gezeigt, wobei sich die weiteren Details zu dem Fahrerassistenzsystem 5 aus der EP 3 132 711 A1 ergeben, auf deren Offenbarungsgehalt hiermit vollumfänglich Bezug genommen wird.

Die Rechenvorrichtung 7 ist dazu eingerichtet mindestens einen Maschinenparameter für das Schneidwerk 2 autonom zu ermitteln und dem Schneidwerk 2 vorzugeben. Es handelt sich bei der Ermittlung der Maschinenparameter um eine autonome Ermittlung insoweit, dass bei der Ermittlung der Maschinenparameter im engeren Sinne ein Eingreifen des Fahrers 8 oder eine Rückfrage an den Fahrer 8 nicht nötig ist. Ein solches Eingreifen des Fahrers 8 ist demnach weiterhin prinzipiell möglich, aber nicht erforderlich.

Das Schneidwerk 2 der dargestellten Erntemaschine 1 weist eine quer zu der Fahrtrichtung der Erntemaschine 1 verlaufende Haspel 9 auf, die über daran angeordnete Zinken 10 bereits auf das noch ungeschnittene Erntegut einwirkt. Die Haspel 9 hat in erster Linie die Aufgabe, das Erntegut einem Messerbalken 11, der ein bewegliches Messer 12 aufweist, zuzuführen. Das Messer 12 oszilliert mit einer Schnittfrequenz, so dass das Erntegut geschnitten wird und auf einen Schneidtisch 13 fällt, an dessen Vorderseite sich der Messerbalken 11 befindet. Anschließend wird das Erntegut, ggf. unter weiterer Einwirkung durch die Haspel 9, mittels einer Einzugsschnecke 14 dem Schrägförderer 4 zugeführt. Der Schrägförderer 4 fördert das Erntegut zu einem diesem prozesstechnisch nachgeordneten Dreschwerk 32.

Je nach Ausstattung erlaubt das Schneidwerk 2 die Einstellung verschiedener Maschinenparameter mittels entsprechender, hier nicht dargestellter Antriebe, die sich über das Fahrerassistenzsystem 5 ansteuern lassen.

Dem in seiner Länge veränderlichen Schneidtisch 13 ist der Maschinenparameter 15a "Schneidtischlänge" zugeordnet. Der Haspel 9 sind der Maschinenparameter 15b "Haspellängsposition" und der Maschinenparameter 15c "Haspelvertikalposition" zugeordnet.

Hier und vorzugsweise ist in dem Speicher 6 des Fahrerassistenzsystems 5 ein funktionales Systemmodell 6a für zumindest einen Teil der Erntemaschine 1 hinterlegt, wobei die Rechenvorrichtung 7 die oben angesprochene, autonome Ermittlung des mindestens einen Maschinenparameters 15a-c basierend auf dem Systemmodell 6a vornimmt. Bei dem funktionalen Systemmodell 6a handelt es sich um ein rechnerisches Modell zur Abbildung funktionaler Zusammenhänge innerhalb der Erntemaschine 1.

Eine im Schrägförderer 4 angeordnete Durchsatzmesseinrichtung 16 dient der Erfassung eines durchsatzabhängigen Gutstromsignals 17. Die Durchsatzmesseinrichtung 16 ermittelt die von dem Erntegutstrom verursachte Auf- und Abbewegungen zumindest eines als Förderkette 18 ausgebildeten Förderorgans 19 des Schrägförderers 4 gegenüber einem Boden 20 des Schrägförderers 4. Hierfür kann die Durchsatzmesseinrichtung 16 zumindest ein nicht gezeigtes induktives Sensorelement, vorzugsweise mehrere über die Breite des Schrägförderers 4 verteilte Sensorelemente, umfassen.

Zusätzlich oder alternativ kann die Durchsatzmesseinrichtung 16 die Auf- und Abbewegungen einer mit der Förderkette 18 in Wirkverbindung stehenden Schichthöhenwalze 21 erfassen, wobei die Schichthöhenwalze 21 derart angeordnet ist, dass die Auf- und Abbewegungen der Förderkette 18 auf die Schichthöhenwalze 21 übertragen werden. Einzelheit bezüglich der Struktur einer derartigen Durchsatzmesseinrichtung 16 sind detailliert in der DE102019116452.4 beschrieben, auf deren Offenbarungsgehalt hiermit vollumfänglich Bezug genommen wird.

Das durchsatzabhängige Gutstromsignal 17 wird von der Durchsatzmesseinrichtung 16 an das Fahrerassistenzsystem 5 übertragen, wobei das Fahrerassistenzsystem 5 das Gutstromsignal 17 aufzeichnet und als Gutstromdaten 6b im Speicher 6 hinterlegt. Im Fahrerassistenzsystem 5 werden aus dem durchsatzabhängigen Gutstromsignal 17 der Erntegutdurchsatz 26, welcher eine durch den Schrägförderer 4 geförderte Menge an Erntegut in Abhängigkeit von der Zeit beschreibt und ein Schwingungskoeffizient 25, welcher ein Maß für die Varianz des Erntegutdurchsatzes 26 beschreibt, ermittelt. Eine separate Ermittlung des Erntegutdurchsatzes mittels der Durchsatzmesseinrichtung 16 liegt ebenfalls im Rahmen der Erfindung.

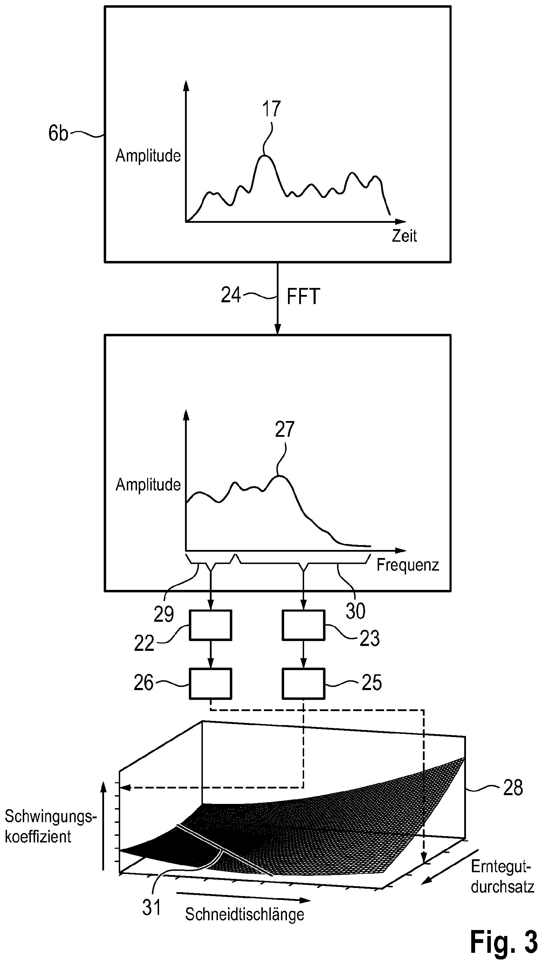

Wie Fig. 3 schematisch zeigt, zerlegt das Fahrerassistenzsystem 5 zur Ermittlung des Erntegutdurchsatzes 26 und des Schwingungskoeffizienten 25 die im Speicher 6 hinterlegten Gutstromdaten 6b in an sich bekannter Weise mittels Frequenzanalyse 24, vorzugsweise mittels Fourier-Analyse, in seine Frequenzanteile 27. Dabei erfolgt eine Unterteilung der Frequenzanteile 27 in einen Gleichanteil 22, welcher den Erntegutdurchsatz 26 beschreibt und in einen Schwingungsanteil 23, welcher die Varianzen des Erntegutdurchsatzes 26, beziehungsweise die Schwingung der Schichthöhenwalze 21, beschreibt, wobei der Schwingungsanteil 23 die Bewertungsgröße Schwingungskoeffizient 25 bildet.

Im Detail werden dem Gleichanteil 22 die Frequenzanteile 29 mit tiefen Frequenzen, vorzugsweise mit einer Frequenz von 0 Hz, zugeordnet und dem Schwingungsanteil 23 die höheren Frequenzanteile 30. Hierbei liegt es im Rahmen der Erfindung etwaige Störanteile herauszufiltern oder dem Schwingungsanteil 23 lediglich einen definierten Anteil der höheren Frequenzanteile 30 zuzuordnen. Im Weiteren berechnet sich der Erntegutdurchsatz 26 aus der Summe der Beträge von den Amplituden der dem Gleichanteil zugeordneten Frequenzanteile 29. Analog hierzu ergibt sich der Schwingungskoeffizient 25 aus der Summe der Beträge von den Amplituden der dem Schwingungsanteil 23 zugeordneten Frequenzen.

Zur Berechnung des Erntegutdurchsatzes 26 und des Schwingungskoeffizienten 25 wird vorzugsweise ein unmittelbar zurückliegendes Zeitintervall der Gutstromdaten 6b betrachtet, so dass die hierfür verwendeten Gutstromdaten 6b den aktuell an der Erntemaschine vorliegenden Ernteprozesszustand beschreiben. Der innerhalb des Zeitintervalls ermittelte Schwingungskoeffizient 25 sowie der Erntegutdurchsatz 26 werden mit der innerhalb des Zeitintervall vorliegenden Schneidtischlänge 15a in ein Kennfeld 28 eingetragen, sodass das Kennfeld 28 die funktionalen Zusammenhänge zwischen den Schwingungskoeffizienten 25, dem Erntegutdurchsatz 26 und der Schneidtischlänge 28 abbildet. Hier und vorzugsweise erfolgt die Ermittlung des Schwingungskoeffizienten 25 sowie des Erntegutdurchsatzes 26 zyklisch, das heißt innerhalb vorgegebener zeitlicher Abstände.

Wie zuvor erläutert, werden die funktionalen Zusammenhänge in einem Kennfeld 28 abgebildet. Für den Beginn eines Dreschvorgangs, bei dem noch keine aktuell vorherrschenden Druschbedingungen in dem Kennfeld 28 abgebildet sind, ist ein Initialkennfeld 6c im Speicher 6 des Fahrerassistenzsystems 5 hinterlegt. Während des Dreschvorgangs wird das Initialkennfeld 6c mittels der hierbei ermittelten funktionalen Zusammenhänge an die aktuell vorliegenden Bedingungen adaptiert, sodass das resultierende Kennfeld 28 die an der Erntemaschine vorliegenden Druschbedingungen abbildet.

Zum Erreichen einer Reduktion der Varianz des Erntegutdurchsatzes 26, welche von dem Schwingungskoeffizienten 25 beschrieben wird, ist das Fahrerassistenzsystem 5 zum Ermitteln des jeweiligen Minimums 31 des Schwingungskoeffizienten 25 für die im Kennfeld 28 skalierten Erntegutdurchsätze 26 eingerichtet. Während eines Dreschvorgangs bestimmt das Fahrerassistenzsystem mittels des Kennfelds 28 das Minimum 31, welches dem zuletzt ermittelten Erntegutdurchsatz 26 zugeordnet ist und die diesem Minimum 31 zugeordnete Schneidtischlänge 15a, welche nun zum Ansteuern dem Schneidwerk 2 vorgegeben wird.

Wie oben erläutert, werden die funktionalen Zusammenhänge in einem Kennfeld 28 abgebildet. Für den Beginn eines Dreschvorgangs, bei dem noch keine aktuell vorherrschenden Druschbedingungen in dem Kennfeld 28 abgebildet sind, wird die Ermittlung der Schneidtischlänge 15a basierend auf dem Initialkennfeld 6c durchgeführt.

In einer weiteren Ausgestaltung ist das Fahrerassistenzsystem 5 derart eingerichtet, dass die Haspellängsposition 15b und/oder die Haspelvertikalposition 15c an die Schneidtischlänge 15a angepasst werden. Hierfür ist vorgesehen, dass sich die Haspel 9 in ihrer Haspellängsposition 15b und/oder Haspelvertikalposition 15c innerhalb eines manuell oder automatisch vorgegebenen Bereichs relativ zu dem Messerbalken 11 befindet. Beispielsweise kann dieser Bereich in Abhängigkeit des zu erntenden Ernteguts im Speicher 6 des Fahrerassistenzsystems 5 hinterlegt sein, oder manuell vom Fahrer 8 eingegebenen werden.

Sämtliche im Zusammenhang mit dem vorstehend beschriebenen Ausführungsbeispiel verwirklichten Merkmale können grundsätzlich auch unabhängig voneinander vorteilhaft wirken und sind nicht zwingend auf die hier dargelegte Merkmalskombination angewiesen, soweit die Merkmale nicht in den unabhängigen Ansprüchen kombiniert werden.

**Bezugszeichenliste:**

| | | | |
|---|---|---|---|
| 1 | Erntemaschine | 29 | Tiefe Frequenzanteile |
| 2 | Schneidwerk | 30 | Hohe Frequenzanteile |
| 3 | Feldbestand | 31 | Minimum |
| 4 | Schrägförderer | 32 | Dreschwerk |
| 5 | Fahrerassistenzsystem | | |
| 6 | Speicher | | |
| 6a | Systemmodell | | |
| 6b | Gutstromdaten | | |
| 6c | Initialkennfeld | | |
| 7 | Rechenvorrichtung | | |
| 8 | Fahrer | | |
| 9 | Haspel | | |
| 10 | Zinken | | |
| 11 | Messerbalken | | |
| 12 | Messer | | |
| 13 | Schneidtisch | | |
| 14 | Einzugsschnecke | | |
| 15a | Schneidtischlänge | | |
| 15b | Haspellängsposition | | |
| 15c | Haspelvertikalposition | | |
| 16 | Durchsatzmesseinrichtung | | |
| 17 | Gutstromsignal | | |
| 18 | Förderkette | | |
| 19 | Förderorgan | | |
| 20 | Boden | | |
| 21 | Schichthöhenwalze | | |
| 22 | Gleichanteil | | |
| 23 | Schwingungsanteil | | |
| 24 | Frequenzanalyse | | |
| 25 | Schwingungskoeffizient | | |
| 26 | Erntegutdurchsatz | | |
| 27 | Frequenzanteile | | |
| 28 | Kennfeld | | |

## Patentansprüche

1. Landwirtschaftliche Erntemaschine (1), insbesondere Mähdrescher, mit einem als Erntevorsatz ausgebildeten Schneidwerk (2) zum Schneiden und Aufnehmen von Erntegut, zumindest umfassend
- einen dem Schneidwerk (2) zugeordneten Schneidtisch (13), welcher in seiner Schneidtischlänge (15a) verstellbar ist,
- eine dem Schneidwerk (2) zugeordnete Haspel (9), welche in einer Haspelvertikalposition (15c) und Haspellängsposition (15b) verstellbar ist,
- einen dem Schneidwerk (2) nachgeordneten und einem Dreschwerk (32) der Erntemaschine (1) vorgeordneten Schrägförderer (4),
- ein Fahrerassistenzsystem (5) zur Ansteuerung des Schneidwerks (2), wobei das Fahrerassistenzsystem (5) einen Speicher (6) zum Hinterlegen von Daten und eine Rechenvorrichtung (7) zur Verarbeitung der in dem Speicher (6) hinterlegten Daten umfasst,
wobei die Rechenvorrichtung (7) dazu eingerichtet ist mittels zumindest einer Eingangsgröße mindestens einen Maschinenparameter autonom zu ermitteln und dem Schneidwerk (2) vorzugeben, wobei die Maschinenparameter die Schneidtischlänge (15a) und/oder die Haspelvertikalposition (15c) und/oder die Haspellängsposition (15b) umfassen kann,
**dadurch gekennzeichnet, dass**
Mittel vorgesehen sind, die einen Erntegutdurchsatz (26) und einen die Schwankung des Erntegutdurchsatzes (26) beschreibenden Schwingungskoeffizienten (25) in einem vor dem Dreschwerk (32) liegenden Bereich ermitteln und dass das Fahrerassistenzsystem (5) eingerichtet ist aus dem ermittelten Schwingungskoeffizienten (25) die Schneidtischlänge (15a) anzupassen, wobei mittels der Rechenvorrichtung (7) die Frequenzanteile in einen Gleichanteil (22) und in einen Schwingungsanteil (23) separiert werden, wobei mittels des Schwingungsanteils (23) der Schwingungskoeffizient (25) bestimmt wird unddass mittels des Gleichanteils (22) der Erntegutdurchsatz bestimmt wird.

2. Landwirtschaftliche Erntemaschine nach Anspruch 1, **dadurch gekennzeichnet, dass** das Fahrerassistenzsystem (5) dazu eingerichtet ist zur Anpassung der Schneidtischlänge (15a) zusätzlich zu dem Schwingungskoeffizienten (25) den ermittelten Erntegutdurchsatz (26) zu verwenden.

3. Landwirtschaftliche Erntemaschine nach Anspruch 1 oder 2, **dadurch gekennzeichnet, dass** die Mittel eine im Schrägförderer (4) befindliche Durchsatzmesseinrichtung (16) umfassen, wobei die Durchsatzmesseinrichtung (16) derart ausgestaltet ist, dass diese ein durchsatzabhängiges Gutstromsignal (17) ermittelt, welches vorzugsweise von einem Erntegutstrom verursachte Auf- und Abbewegungen eines Förderorgans (19), insbesondere einer umlaufend antreibbaren Förderkette (18) umfasst.

4. Landwirtschaftliche Erntemaschine nach Anspruch 3, **dadurch gekennzeichnet, dass** die Durchsatzmesseinrichtung (16) mindestens ein Sensorelement, vorzugsweise ein induktives Sensorelement umfasst, welches die von einem Erntegutstrom verursachte Auf- und Abbewegungen des Förderorgans (19) berührungslos erfasst.

5. Landwirtschaftliche Erntemaschine nach einem der Ansprüche 3 bis 4, **dadurch gekennzeichnet, dass** die Durchsatzmesseinrichtung (16) mit einer im Schrägförderer (4) befindlichen Schichthöhenwalze (21) in Wirkverbindung steht, wobei die Schichthöhenwalze (21) derart angeordnet ist, dass die von dem Erntegutstrom verursachten Auf- und Abbewegungen des Förderorgans (19) auf die Schichthöhenwalze (21) übertragen werden, wobei die Durchsatzmesseinrichtung (16) derart ausgebildet ist, dass diese die Auf- und Abbewegungen der Schichthöhenwalze (21) erfasst.

6. Landwirtschaftliche Erntemaschine nach einem der Ansprüche 1 bis 5, **dadurch gekennzeichnet, dass** das Fahrerassistenzsystem (5) das durchsatzabhängige Gutstromsignal (17) aufzeichnet und im Speicher (6) hinterlegt, wobei das Gutstromsignal (17) in der Rechenvorrichtung (7) mittels Frequenzanalyse (24) in seine Frequenzanteile zerlegt wird.

7. Landwirtschaftliche Erntemaschine nach einem der Ansprüche 1 bis 6, **dadurch gekennzeichnet, dass** der Gleichanteil (22) die Frequenzanteile mit tiefen Frequenzen (29) und der Schwingungsanteil (23) die Frequenzanteile mit höheren Frequenzen (30) umfasst.

8. Landwirtschaftliche Erntemaschine nach einem der Ansprüche 1 bis 7, **dadurch gekennzeichnet, dass** eine Summe der Beträge der Amplituden der dem Gleichanteil (22) zugeordneten Frequenzen den Erntegutdurchsatz (26) bildet.

9. Landwirtschaftliche Erntemaschine nach einem der Ansprüche 1 bis 8, **dadurch gekennzeichnet, dass** eine Summe der Beträge der Amplituden der dem Schwingungsanteil (23) zugeordneten Frequenzen den Schwingungskoeffizienten (25) bildet.

10. Landwirtschaftliche Erntemaschine nach einem der Ansprüche 1 bis 9, **dadurch gekennzeichnet, dass** das Fahrerassistenzsystem (5) zum Abbilden der funktionalen Zusammenhänge zwischen dem Schwingungskoeffizienten (25), dem Erntegutdurchsatz (26) und der Schneidtischlänge (15a) in einem Kennfeld (28) ausgebildet ist und mittels des Kennfeldes (28) die Schneidtischlänge (15a) ansteuert.

11. Landwirtschaftliche Erntemaschine nach einem der Ansprüche 1 bis 10, **dadurch gekennzeichnet, dass** innerhalb des Kennfeldes (28) für die skalierten Erntegutdurchsätze (26) eine jeweilige Schneidtischlänge (15a) ermittelt wird, bei welcher der Schwingungskoeffizient (25) ein Minimum (31) annimmt.

12. Landwirtschaftliche Erntemaschine nach einem der Ansprüche 1 bis 11, **dadurch gekennzeichnet, dass** das Fahrerassistenzsystem (5) dazu eingerichtet ist, für einen aktuell an der Erntemaschine (1) vorliegenden Erntegutdurchsatz (26) dem Schneidwerk (2) die Schneidtischlänge (15a) vorzugeben, bei der der Schwingungskoeffizient (25) das Minimum (31) annimmt.

13. Landwirtschaftliche Erntemaschine nach einem der Ansprüche 1 bis 12, **dadurch gekennzeichnet, dass** das Fahrerassistenzsystem (5) derart ausgestaltet ist, dass diese das Kennfeld (28) zumindest zyklisch an einen während eines Dreschvorgangs vorliegenden Ernteprozesszustand anpasst.

14. Landwirtschaftliche Erntemaschine nach einem der Ansprüche 1 bis 13, **dadurch gekennzeichnet, dass** mindestens ein Initialkennfeld (6c) im Speicher (6) des Fahrerassistenzsystems (5) hinterlegt ist und dass bei der ersten Ermittlung der Schneidtischlänge (15a) das Fahrerassistenzsystem (5) die Ermittlung basierend auf dem Initialkennfeld (6c) vornimmt, vorzugsweise, dass zu Beginn des Dreschvorgangs das Fahrerassistenzsystem (5) die Ermittlung der Schneidtischlänge (15a) basierend auf dem Initialkennfeld (6c) vornimmt.

15. Landwirtschaftliche Erntemaschine nach einem der Ansprüche 1 bis 14, **dadurch gekennzeichnet, dass** das Fahrerassistenzsystem (5) eingerichtet ist die Haspellängsposition (15b) und/oder Haspelvertikalposition (15c) an die Schneidtischlänge (15a) anzupassen.

## Claims

1. Agricultural harvesting machine (1), in particular combine harvester, with a cutting mechanism (2) designed as a harvesting attachment for cutting and picking up crop material, at least comprising
- a cutting table (13) which is assigned to the cutting mechanism (2) and can be adjusted in its cutting table length (15a),
- a reel (9) which is assigned to the cutting
mechanism (2) and can be adjusted in a reel vertical position (15c) and reel longitudinal position (15b),
- an inclined conveyor (4) which is arranged downstream of the cutting mechanism (2) and upstream of a threshing mechanism (32) of the harvesting machine (1),
- a driver assistance system (5) for controlling the cutting mechanism (2), the driver assistance system (5) comprising a memory (6) for storing data and a computing device (7) for processing the data stored in the memory (6),
the computing device (7) being set up to autonomously determine at least one machine parameter by means of at least one input variable and to preset it for the cutting mechanism (2), it being possible for the machine parameters to comprise the cutting table length (15a) and/or the reel vertical position (15c) and/or the reel longitudinal position (15b),
**characterised in that**
means are provided which determine a crop throughput (26) and a coefficient of vibration (25) describing the fluctuation of the crop throughput (26) in a region lying in front of the threshing unit (32), and **in that** the driver assistance system (5) is set up to adapt the cutting table length (15a) from the determined vibration coefficient (25), the frequency components being separated by means of the computing device (7) into a steady share (22) and a vibration share (23), the coefficient of vibration (25) being determined by means of the vibration share (23), and the crop throughput being determined by means of the steady share (22).

2. Agricultural harvester according to claim 1, **characterised in that** the driver assistance system (5) is set up to use the determined crop throughput (26) in addition to the coefficient of vibration (25) to adjust the cutting table length (15a).

3. Agricultural harvesting machine according to claim 1 or 2, **characterised in that** the means comprise a throughput measuring device (16) located in the inclined conveyor (4), the throughput measuring device (16) being designed in such a way that it determines a throughput-dependent crop flow (17), which preferably comprises upward and downward movements of a conveyor member (19), in particular of a conveyor chain (18) which can be driven in rotation, caused by a crop flow.

4. Agricultural harvesting machine according to claim 3, **characterised in that** the throughput measuring device (16) comprises at least one sensor element, preferably an inductive sensor element, which detects the up and down movements of the conveyor member (19) caused by a crop flow without contact.

5. Agricultural harvesting machine according to one of the claims 3 to 4, **characterised in that** the throughput measuring device (16) is in operative connection with a layer height roller (21) located in the inclined conveyor (4), the layer height roller (21) being arranged in such a manner that the upward and downward movements of the conveyor member (19) caused by the crop flow are transmitted to the layer height roller (21), wherein the throughput measuring device (16) is designed in such a way that it detects the upward and downward movements of the layer height roller (21).

6. Agricultural harvester according to one of claims 1 to 5, **characterised in that** the driver assistance system (5) records the throughput-dependent crop flow (17) and stores it in the memory (6), the crop flow (17) being broken down into its frequency components in the computing device (7) by means of frequency analysis (24).

7. Agricultural harvester according to any one of claims 1 to 6, **characterised in that** the steady share (22) comprises the frequency components with low frequencies components (29) and the vibration share (23) comprises the frequency components with high frequency components (30).

8. Agricultural harvesting machine according to any one of claims 1 to 7, **characterised in that** a sum of the magnitudes of the amplitudes of the frequencies associated with the steady share (22) forms the crop throughput (26).

9. Agricultural harvesting machine according to any one of claims 1 to 8, **characterised in that** a sum of the magnitudes of the amplitudes of the frequencies associated with the vibration share (23) forms the coefficient of vibration (25).

10. Agricultural harvesting machine according to one of claims 1 to 9, **characterised in that** the driver assistance system (5) is designed to map the functional relationships between the coefficient of vibration (25), the crop throughput (26) and the cutting table length (15a) in a characteristic diagram (28) and controls the cutting table length (15a) by means of the characteristic diagram (28).

11. Agricultural harvesting machine according to one of claims 1 to 10, **characterised in that** within the characteristic diagram (28) for the scaled crop throughputs (26) a respective cutting table length (15a) is determined at which the coefficient of vibration (25) assumes a minimum (31).

12. Agricultural harvesting machine according to one of the claims 1 to 11, **characterised in that** the driver assistance system (5) is set up to preset for the cutting mechanism (2) the cutting table length (15a) at which the coefficient of vibration (25) assumes the minimum (31) for a crop throughput (26) currently present at the harvesting machine (1).

13. Agricultural harvesting machine according to one of claims 1 to 12, **characterised in that** the driver assistance system (5) is designed in such a way that it adapts the characteristic diagram (28) at least cyclically to a harvesting process state present during a threshing operation.

14. Agricultural harvesting machine according to one of the claims 1 to 13, **characterised in that** at least one initial characteristic diagram (6c) is stored in the memory (6) of the driver assistance system (5) and that during the first determination of the cutting table length (15a) the driver assistance system (5) carries out the determination based on the initial characteristic diagram (6c), preferably that at the beginning of the threshing process the driver assistance system (5) carries out the determination of the cutting table length (15a) based on the initial characteristic diagram (6c).

15. Agricultural harvesting machine according to one of the claims 1 to 14, **characterised in that** the driver assistance system (5) is set up to adapt the reel longitudinal position (15b) and/or reel vertical position (15c) to the cutting table length (15a).

## Revendications

1. Machine agricole de récolte (1), en particulier moissonneuse-batteuse, comprenant un tablier de coupe (2) conformé en outil frontal de récolte pour couper et ramasser du produit, incluant au moins
- une table de coupe (13) qui est associée au tablier de coupe (2) et qui est réglable dans sa longueur de table de coupe (15a),
- un rabatteur (9) qui est associé au tablier de coupe (2) et qui est réglable dans sa position verticale de rabatteur (15c) et sa position longitudinale de rabatteur (15b),
- un convoyeur incliné (4) disposé en aval du tablier de coupe (2) et en amont du système de battage (32) de la machine de récolte (1),
- un système d'assistance à la conduite (5) pour piloter le tablier de coupe (2), le système d'assistance à la conduite (5) incluant une mémoire (6) pour stocker des données et un dispositif de calcul (7) pour traiter les données stockées dans la mémoire (6),
le dispositif de calcul (7) étant agencé pour déterminer de manière autonome, au moyen d'au moins une grandeur d'entrée, au moins un paramètre machine et pour le prescrire au tablier de coupe (2), les paramètres machine pouvant inclure la longueur de table de coupe (15a) et/ou la position verticale de rabatteur (15c) et/ou la position longitudinale de rabatteur (15b),
**caractérisée en ce que**
des moyens sont prévus, lesquels déterminent un débit de produit (26) et un coefficient d'oscillation (25) décrivant la variation du débit de produit (26) dans une zone située devant le système de battage (32), et **en ce que** le système d'assistance à la conduite (5) est agencé pour adapter la longueur de table de coupe (15a) à partir du coefficient d'oscillation (25) déterminé, les composantes de fréquences étant séparées en une composante invariante (22) et en une composante oscillante (23) au moyen du dispositif de calcul (7), le coefficient d'oscillation (25) étant déterminé au moyen de la composante oscillante (23), et **en ce que** le débit de produit est déterminé au moyen de la composante invariante (22).

2. Machine agricole de récolte selon la revendication 1, **caractérisée en ce que** le système d'assistance à la conduite (5) est agencé pour utiliser le débit de produit (26) déterminé en plus du coefficient d'oscillation (25) pour adapter la longueur de table de coupe (15a).

3. Machine agricole de récolte selon la revendication 1 ou 2, **caractérisée en ce que** les moyens incluent un équipement de mesure de débit (16) se trouvant dans le convoyeur incliné (4), l'équipement de mesure de débit (16) étant conçu de façon qu'il détermine un signal de flux de produit (17) dépendant du débit, lequel inclut préférentiellement des mouvements montants et descendants d'un organe d'alimentation (19), en particulier d'une chaîne d'alimentation (18), dus à un flux de produit récolté.

4. Machine agricole de récolte selon la revendication 3, **caractérisée en ce que** l'équipement de mesure de débit (16) inclut au moins un élément de capteur, préférentiellement un élément de capteur inductif, qui palpe sans contact les mouvements montants et descendants de l'organe d'alimentation (19) dus à un flux de produit récolté.

5. Machine agricole de récolte selon une des revendications 3 et 4, **caractérisée en ce que** l'équipement de mesure de débit (16) est en liaison active avec un rouleau de hauteur de couche (21) se trouvant dans le convoyeur incliné (4), le rouleau de hauteur de couche (21) étant disposé de façon que les mouvements montants et descendants de l'organe d'alimentation (19) dus au flux de produit récolté soient transmis au rouleau de hauteur de couche (21), l'équipement de mesure de débit (16) étant conçu de façon qu'il capte les mouvements montants et descendants du rouleau de hauteur de couche (21).

6. Machine agricole de récolte selon une des revendications 1 à 5, **caractérisée en ce que** le système d'assistance à la conduite (5) enregistre le signal de flux de produit (17) dépendant du débit et le stocke dans la mémoire (6), le signal de flux de produit (17) étant décomposé dans le dispositif de calcul (7) en ses composantes de fréquences au moyen d'une analyse de fréquences (24) .

7. Machine agricole de récolte selon une des revendications 1 à 6, **caractérisée en ce que** la composante constante (22) inclut les composantes de fréquences avec des basses fréquences (29) et la composante oscillante (23) inclut les composantes de fréquences avec de plus hautes fréquences (30).

8. Machine agricole de récolte selon une des revendications 1 à 7, **caractérisée en ce qu'**une somme des valeurs des amplitudes des fréquences associées à la composante constante (22) forme le débit de produit (26).

9. Machine agricole de récolte selon une des revendications 1 à 8, **caractérisée en ce qu'**une somme des valeurs des amplitudes des fréquences associées à la composante oscillante (23) forme le coefficient d'oscillation (25).

10. Machine agricole de récolte selon une des revendications 1 à 9, **caractérisée en ce que** le système d'assistance à la conduite (5) est conçu pour représenter les relations fonctionnelles entre le coefficient d'oscillation (25), le débit de produit (26) et la longueur de table de coupe (15a) dans un diagramme caractéristique (28) et pilote la longueur de table de coupe (15a) au moyen du diagramme caractéristique (28).

11. Machine agricole de récolte selon une des revendications 1 à 10, **caractérisée en ce qu'**à l'intérieur du diagramme caractéristique (28) est déterminée, pour les débits de produit échelonnés (26), une longueur de table de coupe (15a) respective à laquelle le coefficient d'oscillation (25) adopte un minimum (31).

12. Machine agricole de récolte selon une des revendications 1 à 11, **caractérisée en ce que** le système d'assistance à la conduite (5) est agencé pour prescrire au tablier de coupe (2), pour un débit de produit existant instantanément sur la machine de récolte (1), la longueur de table de coupe (15a) à laquelle le coefficient d'oscillation (25) adopte le minimum (31).

13. Machine agricole de récolte selon une des revendications 1 à 12, **caractérisée en ce que** le système d'assistance à la conduite (5) est conçu de façon qu'il adapte le diagramme caractéristique (28) au moins cycliquement à un état de processus de récolte existant pendant une opération de battage.

14. Machine agricole de récolte selon une des revendications 1 à 13, **caractérisée en ce que** le au moins un diagramme caractéristique initial (6c) est stocké dans la mémoire (6) du système d'assistance à la conduite (5) et **en ce que**, lors de la première détermination de la longueur de table de coupe (15a), le système d'assistance à la conduite (5) effectue la détermination sur la base du diagramme caractéristique initial (6c), préférentiellement **en ce qu'**au début de l'opération de battage, le système d'assistance à la conduite (5) effectue la détermination de la longueur de table de coupe (15a) sur la base du diagramme caractéristique initial (6c).

15. Machine agricole de récolte selon une des revendications 1 à 14, **caractérisée en ce que** le système d'assistance à la conduite (5) est agencé pour adapter la position longitudinale de rabatteur (15b) et/ou la position verticale de rabatteur (15c) à la longueur de table de coupe (15a).
